# EUROPEAN PATENT SPECIFICATION

(11) **EP 0 566 946 B1**
(45) Date of publication and mention of the grant of the patent: **15.01.1997**
(21) Application number: 93105919.0
(22) Date of filing: 13.04.1993
(51) Int. Cl.: G01P 1/02

(54) **Magnetic rotary sensor**
Magnetischer Drehmessfühler
Capteur magnétique rotatif

(30) Priority: 18.04.1992 JP 37541/92 U
(43) Date of publication of application: 27.10.1993
(73) Proprietor: HONDA LOCK MANUFACTURING CO., LTD., Sadowaracho Miyazaki-gun Miyazaki-ken (JP)
(72) Inventor: Nakatake, Yoshiteru c/o Honda Lock MFG Co.LTD, Sadorawa-cho,Miyazaki-gun, Miyazaki-ken (JP); Karino,Kazuya c/o Honda Lock MFG.Co.Ltd, Sadowara-cho, Miyazaki-gun, Miyazaki-ken (JP); Yuhi, Kazuo c/o Honda Lock MFG.,Co.,LTD, Sadowara-cho, Miyazaki-gun, Miyazaki-ken (JP)
(74) Representative: Stachow, Ernst-Walther, Prof. Dr.

(56) References cited:
- EP-A- 0 194 213
- EP-A- 0 480 844
- US-A- 5 032 790
- PATENT ABSTRACTS OF JAPAN vol. 13, no. 104 (P-842)13 March 1989 & JP-A-63 285 414 ( SUMITOMO ELECTRIC IND LTD ).

## Description

### BACKGROUND OF THE INVENTION

The invention is concerned with the structure of rotary sensor particularly suitable for wheel sensor of vehicle.

A rotary sensor of the sort disclosed by the Japanese Patent No. 63-285414 is known. According to the disclosed patent, the sensor is composed of a stay mounted on a vehicle, a case containing sensor elements such as the pole piece and bobbin etc., and that is mounted on said stay, wherein the sensor elements such as the pole piece and bobbin etc. are fixed in a molded resin case, and the case is fixed into the stay by pressing the case into the hole of the stay, and the molded resin case is formed for the unification of both case and body.

The difficulties with this sensor are 1) that the assembly work of the whole wheel sensor is very complicated due to the difficulty to install sensor elements such as pole piece and the bobbin etc. in the case, and 2) that the high machining accuracy is required for the pole piece and the case to prevent water penetration through the tolerated gap between the pole piece and the case, because no particular device for water proof to the tolerated gap is provided.

Furthermore from the US-A-5 032 790 is known a passive magnetic speed sensor which discloses a moulded insulating bobbin with a pole piece which protrudes partially out of the insulating bobbin and a magnet at one end of the pole piece within the insulating bobbin. A reeled coil having a terminal is wound around the pole piece and a retaining bracket or a stay is provided for mounting the bobbin unit and a moulded resin body is uniting the stay with the bobbin unit.

For assembling this speed sensor two molding steps are necessary and any methods for keeping the relationship while pouring the resin into a cavity are not definded and therefore it is not sure that the pole piece is kept at original position until insulating the bobbin in the first molding step. Further in the second step of molding of the body a notch is provided to determine the relationship between the retainer plate and a mold cavity but this structure does not have means for maintaining the relationship of the retainer plate and the bobbin after the molding.

### SUMMARY OF THE INVENTION

It is an object of the present invention to provide a rotary sensor that introduces easy assembly and improved water proof, and to lower the requirement of the machining accuracy of a pole piece periphery and a case inner periphery.

As a mean to solve the above mentioned problems, a rotary sensor comprises a bobbin unit including a cylindrical bobbin with a reeled coil, a pole piece set in said bobbin, a magnet disposed at the end of said pole piece and a terminal connected to said coil, a stay supporting said bobbin unit, said stay comprising an engagement aperture passing through the stay and formed with engaging key convexes, key elements passing into said engagement aperture and engaging key convexes to prevent relative movement of the bobbin with respect to the stay and a molded resin body unitiing said stay with said bobbin unit;
wherein said stay defines first and second planar surfaces and an engagement aperture extending from said first planar surface to said second planar surface, and wherein contact faces adapted to touch the first planar surface of the stay are formed in the key concaves of the bobbin.

### BRIEF DESCRIPTION OF THE DRAWINGS

The above and other objects of the invention will be seen by the reference to the description taken in connection with the accompanying drawings, in which:
Figure 1 is a perspective view of a sensor unit related to the present invention; and
Figure 2 is a assembly view of a sensor unit related to the present invention; and
Figure 3 is a perspective view of a rotary sensor related to the present invention; and
Figure 4 is a vertical section of a rotary sensor related to the present invention; and
Figure 5 is a sectional view taken on lines V-V of Figure 4.

### DETAILLED DESCRIPTION OF THE PREFERRED EMBODIMENT

In order to demonstrate the invention, the following example is set forth for the purpose of illustration.

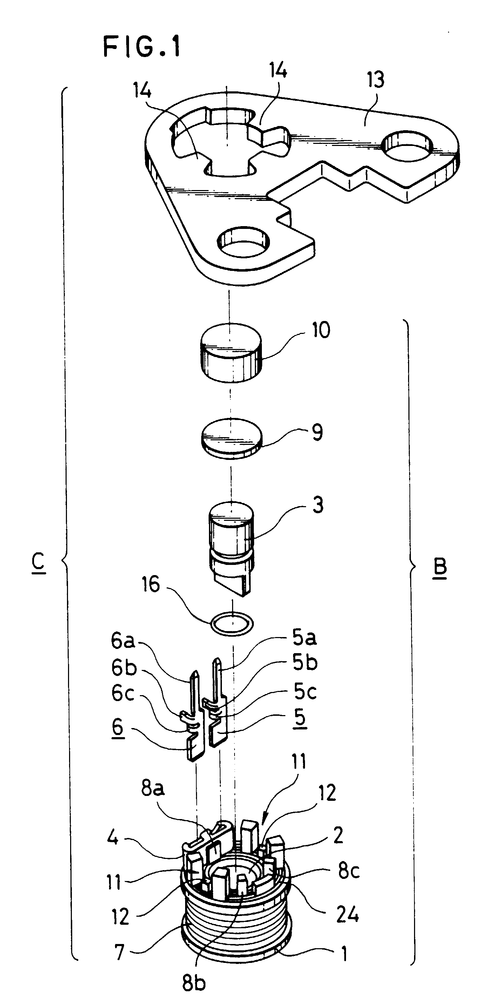

Figure 1 is a perspective view of a sensor unit to the present invention.

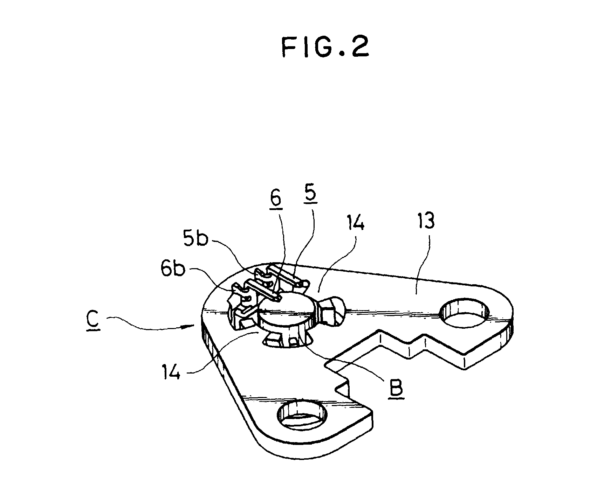

Figure 2 is a assembly view of a sensor unit related to the present invention.

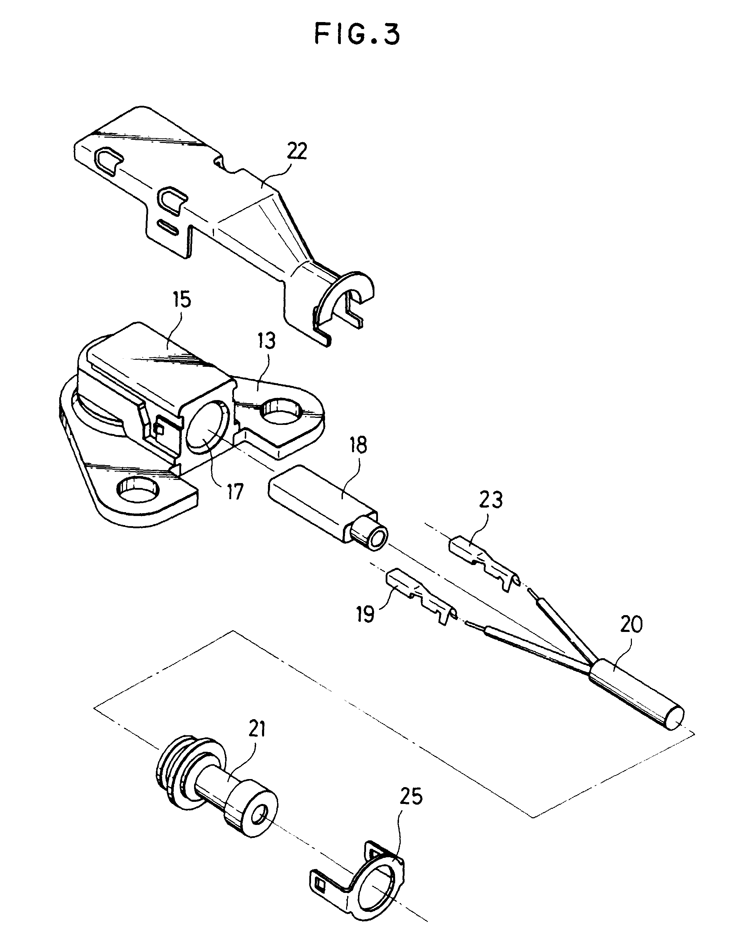

Figure 3 is a perspective view of a rotary sensor related to the present invention.

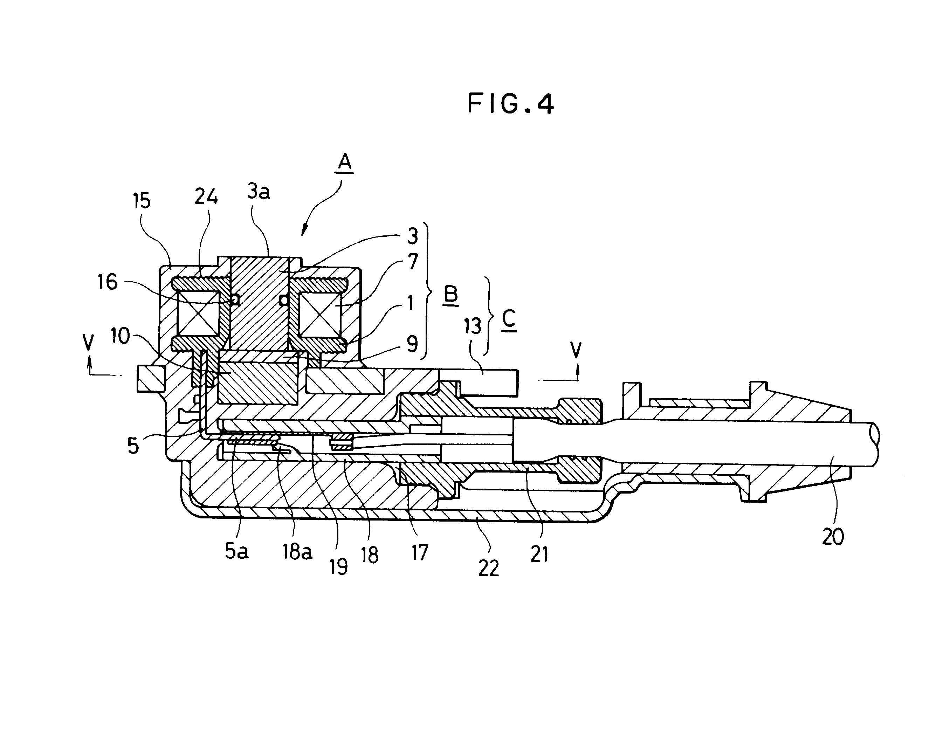

Figure 4 is a vertical section of a rotary sensor related to the present invention.

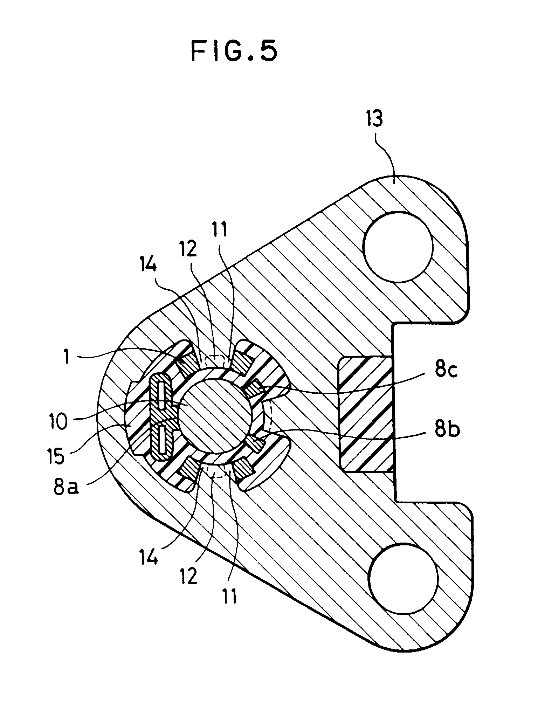

Figure 5 is a sectional view taken on lines V-V of Figure 4.

Referring to an embodiment of the invention illustrated in Figure 4, a wheel sensor A mainly consists of a bobbin unit B comprising a bobbin 1 and a pole piece 3, a stay 13 mounting said bobbin unit B thereon, and a body 15 that said stay 13 and said bobbin unit B are fixed together therein.

As shown in Figure 1 and 4, a cylindrical bobbin 1 has an inner periphery of cylinder along the axis line of the bobbin 1, which the pole piece 3 is pressed and fixed therein. A terminal attachment 4 is mounted at the end face of the bobbin 1, and a pair of male terminals 5, 6 are pressed and fixed in said terminal attachment 4, wherein the terminal 5, 6 have connectors 5a, 6a at the front edges, terminal portions 5b, 6b and calk portions 5c, 6c in the middle. As for a coil 7, one end of a coil 7 is connected to the terminal portion 5b of the terminal 5 and goes through a calk portion 5c and then reeled on a outer periphery of the bobbin 1. The other end of the coil 7 goes through the calk portion 6c of another terminal 6, and then being cut off after connecting it to the connector 6b. The calk portions 5c, 6c are to be pressed and fused after the press of the calk portion 5c, 6c.

Three circular guide protrusions 8a, 8b, 8c are formed on the end face of said bobbin 1, and a cylindrical magnet 9 and a yoke 10 are slided into a cylinder hole of said bobbin 1 in order. Then after the insertion of the magnet 9 and the yoke 10, the terminal 5, 6 are bent up at the terminal portions 5b, 6b. A bobbin unit B is composed as described above (Refer to Figure 2 ). An unification, as above described, of the sensor elements such as a bobbin 1, a pole piece 3, terminals 5, 6, a magnet 9, and a yoke 10 improves the workability of assembling the wheel sensor A, and at the same time enables the automated assembly.

As shown in Figure 1 and 2 for the description of a sensor unit C, the end face of said bobbin 1 has two engaging key concaves 11 in which contact faces 12 are formed, and the engaging key concaves 11 are set according to the locations of the engaging protrusion 14 of the stay 13, and pressed into the convexes 14 until contact faces 12 of the concaves 11 touch to the bottom face of said engaging key convexes 14, namely, until the design position of the concaves 11 to the stay 13.

As shown in Figure 3, 4, and 5, the sensor unit C mainly consisting of the bobbin unit B and the stay 13, is covered with the body 15 made of molded resin, which fixes the bobbin unit B on the stay 13. In this manner, by forming the body 15 around the sensor unit C comprising the bobbin unit B and the stay 13, with molded resin, the bobbin unit B and the stay 13 are united firmly, and consequently it works for water proof more effectively. In this case, as shown in the Figure 5, said molded resin body 15 exists between the pole piece 3 and the stay 13, except engaging key joint portions of said engaging key concaves 11 and said engaging key convexes 14, which makes that the bobbin 1 or the body 15 exist all around the juncture between the pole piece 3, or the magnet 9, or the yoke 10, and the stay 13, and this structure duely helps to prevent the water penetration into the terminals 5, 6 and the coil 7 , even though it happened that water penetrated between the stay 13 and the body 15. Because of this, the outer periphery of the pole piece 3 and an inner periphery 2 of the bobbin 1, do not require such high machining accuracy, and the manufacturing process of the pole piece 3 and the bobbin 1 becomes much easier.
Besides, referring to Figure 1, since the labyrinth 24 is formed on the both sides, top and bottom, of the bobbin 1, even in case that the water penetration occurred, this labyrinth 24 would help to extend the reaching distance of the water penetration.

As shown in Figure 3 and 4, an open cavity 17 is made in the body 15 on the rear side of said stay 13, and the deep portion of said cavity 17, connectors 5a, 6a of said terminals 5, are located. The mere insertion of a joint 18 into said cavity 17 provides firm fixation of the joint 18 with a claw 18a, in said joint 18, and at the same time, it gives connections of female terminals 19, 23 connected to a outgoing signal code 20, with said terminal 5, 6. The entrance of said cavity 17 is protected from water penetration with rubber boot 21, and said rubber boot 21 is firmly fixed on the body 15 with a rubber holder 25. Said outgoing signal code 20 is also firmly fixed with a code clamper 22 fixed on the body 15.

As shown in Figure 4, a front face 3a of the pole piece 3 is exposed out of a body 15, and the front face 3a is made to receive a change of magnetic line of force, and the change of the magnetic line of force received by the front face 3a of the pole piece 3 is converted into electrical signal by the coil 7 reeled on the bobbin 1 and transmitted to a measuring equipment not mentioned in drawing, through the outgoing signal code 20.

As described above, a rotary sensor comprising a cylindrical reeled bobbin unit comprising a pole piece set in said bobbin, a magnet disposed at the edge of pole piece, and a terminal connected to said coil, a stay mounting said bobbin unit thereon, and a molded resin body united said stay with said bobbin unit, has superior effects such as improving the workability of the assembly, and protecting from water penetration easily due to the firm unification of the bobbin unit and the stay, and moreover enabling the automated assembly. Further, as a superior point of this invention, since the molded resin body lies between the bobbin unit and the stay, which makes either the bobbin or the body exists all around the juncture between the pole piece or the magnet, and the stay, even if it happened that water penetrated between the stay and the body, the sensor still can prevent the water penetration to the terminal and the coil. Further more, since the provision of "O" ring between said pole piece and bobbin, can prevent the water penetration into the tolerated gap between the pole piece and the body, the outer periphery of the pole piece and the inner periphery of the bobbin does not require such high machining accuracy so that the manufacturing of the said materials becomes so easy.

## Claims

1. A rotary sensor comprising:
a bobbin unit (B) including
a cylindrical bobbin (1) with a reeled coil (7),
a pole piece (3) set in said bobbin (1),
a magnet (9) disposed at the end of said pole piece (3), and
a terminal (5, 6) connected to said coil (7),
a stay (13) supporting said bobbin unit (B), said stay (13) comprising an engagement aperture passing through the stay (13) and formed with engaging key convexes (14),
key elements passing into said engagement aperture and engaging said engaging key convexes (14) to prevent relative movement of the bobbin (1) with respect to the stay (13) and a molded resin body (15) unitiing said stay (13) with said bobbin unit (B);
wherein said stay (13) defines first and second planar surfaces and an engagement aperture extending from said first planar surface to said second planar surface, and
wherein contact faces (12) adapted to touch the first planar surface of the stay (13) are formed in the key concaves of the bobbin (1).

## Patentansprüche

1. Ein Drehmeßfühler aufweisend:
- eine Spulenkörpervorrichtung (B), die
-- einen zylindrischen Spulenkörper (1) mit einer gewickelten Spule (7),
-- einen in den Spulenkörper (1) eingesetzten Polschuh (3),
-- einen an einem Ende des Polschuhs (3) angeordneten Magneten (9) und
-- einen mit der Spule (7) verbundenen Anschluß (5, 6) einschließt,
- eine Stütze (13) zum Abstützen der Spulenkörpervorrichtung (B), wobei die Stütze (13) eine Aufnahmeöffnung aufweist, die durch die Stütze (13) hindurchführt und mit Eingriffsvorsprüngen (14) ausgeformt ist,
- Vorsprünge, die in die Aufnahmeöffnung und die Eingriffsvorsprünge eingreifen, um eine relative Bewegung des Spulenkörpers (1) in bezug auf die Stütze (13) und ein aus Harz gegossenes Gehäuse (15), das die Stütze (13) mit der Spulenkörpervorrichtung (B) aufnimmt, zu verhindern,
wobei die Stütze (13) eine erste und eine zweite ebene Fläche festlegt und die Eingriffsöffnung sich von der ersten ebenen Fläche zur zweiten ebenen Fläche erstreckt und
ferner sind die Kontaktflächen (12), die zur Berührung mit der ersten ebenen Fläche der Stütze (13) angepaßt sind, in den Aussparungen des Spulenkörpers (1) ausgeformt.

## Revendications

1. Détecteur rotatif comprenant :
un module de bobine (B) comportant :
• une bobine cylindrique (1) munie d'un enroulement (7),
• une pièce polaire (3) agencée dans ladite bobine (1),
• un aimant (9) disposé à l'extrémité de ladite pièce polaire (3), et • des bornes (5, 6) reliées audit enroulement (7),
• un support (13) sur lequel repose ledit module de bobine (B),
• ledit support (13) comprenant une ouverture de mise en prise traversant celui-ci et formée de saillies (14) pour clef à enclenchement,
• des éléments de clef passant dans ladite ouverture de mise en prise et venant en prise avec lesdites saillies (14) pour clef à enclenchement afin d'empêcher un mouvement relatif de la bobine (1) par rapport au support (13) et
• un corps (15) en résine moulée qui joint ledit support (13) audit module de bobine (B) ;
dans lequel ledit support (13) présente des première et seconde surfaces planes et une ouverture de mise en prise qui s'étend entre ladite première surface plane et ladite seconde surface plane, et
dans lequel des faces de contact (12), adaptées pour être en contact avec la première surface plane du support (13), sont formées dans les creux pour clef de la bobine (1).
